# EUROPEAN PATENT APPLICATION

(11) **EP 2 575 088 A1**
(43) Date of publication of application: **03.04.2013**
(21) Application number: 10178197.9
(22) Date of filing: 22.09.2010
(51) Int. Cl.: G06Q 10/00, G06Q 30/04

(54) **A computer implemented method and a system for cash management**

(71) Applicant: Siemens Aktiengesellschaft, 80333 München (DE)
(72) Inventor: The designation of the inventor has not yet been filed

(57) **Abstract**

A computer implemented method and system for cash management is presented. The method includes defining a target date for invoice issuance for the date when each of the invoicing events are planned to be invoiced to the customer and defining a due date for a payment of the invoicing events by the customer. The method further includes issuing the invoice to the customer for these invoicing events by the target date for invoice issuance, providing a first input interface for receiving a issue confirmation for issuing the invoice for these invoicing events, providing an indication if the issue confirmation for these invoicing events is not received by the target date for invoice issuance, providing a second input interface for receiving a payment confirmation on payment of the invoice by the customer and providing an indication if the payment confirmation is not received until the due date.

## Description

### FIELD OF THE INVENTION

The present invention relates to cash management and more particularly to a computer implemented method and a system for cash management.

### BACKGROUND OF THE INVENTION

Cash management is a very important function in all phases of a project beginning with an initial preparation of a sales offer to a customer and continuing all the way through the implementation phase of the project. Cash management activities for projects include diverse financial activities, such as, the preparation of an initial payment schedule; to the tracking of invoicing and payments; to cash forecasting; capital interest calculations; exchange rate hedging; and reporting.

Due to the wide variety of financial activities involved in cash management for projects it is extremely important that a standardized cash management system is designed in such a way to allow the user to easily set up and control any type of payment schedule imaginable, including but not limited to, payment schedules with fixed and/or variable payment portions as well as payment schedules in multiple foreign currencies.

It is therefore desirable to design a cash management system which has the capability to allow a contract price to be broken into several large fixed and/or variable contract price pieces in their respective original contract currency. In addition, it is desirable that each of these contract price pieces can then broken down further into smaller invoicing events to fit the payment schedule for each particular contract price piece.

In addition, it is also extremely important that the cash management system is designed in such a way that emphasis is placed on the on-time issuance of invoices to the customer. Simply stated, if the invoicing events are actually invoiced to the customer at a later date than is contractually stated in the contract, then the customer payment will be at later date than originally planned since the terms of payment in the contract are typically linked to the actual date that the invoice is received by the customer. Therefore, the late issuance of invoices to the customer will result in several negative financial effects on the project a reduction in cash flow, an increase of capital interest costs (internal financing costs) and adjustments in the cash forecast.

It is, therefore, desirable to have a cash management system that has the capability to allow the user to define a target date for invoice issuance for the date when each of the invoicing events are planned to be invoiced to the customer and also define a due date for the payment of the invoicing events by the customer in accordance with the invoicing and payment terms of the contract. The system can then be designed to issue reminders in case the invoicing events have not been invoiced to the customer as per their target date for invoice issuance. In addition, the system should be able to track the actual payments of the invoice by the customer and issue reminders if the payment is not made by the customers on a specific date.

Furthermore, in the case that the invoicing events have not been invoiced to the customer as per their planned target date for invoice issuance, the system must be designed to allow a modification to the original target date for invoice issuance as well as to allow the resulting modification of the original forecast date for the receipt of the customer payment.

### SUMMARY OF THE INVENTION

Briefly in accordance with one aspect of the present invention a computer implemented method for cash management is provided. The method includes defining a target date for invoice issuance for the date when each of the invoicing events are planned to be invoiced to the customer and defining a due date for a payment of the invoicing events by the customer. The method further includes issuing the invoice to the customer for these invoicing events by the target date for invoice issuance, providing a first input interface for receiving a issue confirmation for issuing the invoice for these invoicing events, providing an indication if the issue confirmation for these invoicing events is not received by the target date for invoice issuance, providing a second input interface for receiving a payment confirmation on payment of the invoice by the customer and providing an indication if the payment confirmation is not received until the due date.

In accordance with another aspect of the present invention a computerized cash management system is provided. The system includes a memory for storing data, an input device for entering data, wherein data comprises a target date for invoice issuance for the invoicing events and a due date for a payment of the invoicing events by a customer. The system also includes a processor configured to access data from the memory, issuing the invoice for the invoicing events to the customer by the target date for invoice issuance for these invoicing events, providing a first input interface for receiving a issue confirmation for issuing the invoice, providing an indication if the issue confirmation is not received by the target date for invoice issuance, providing a second input interface for receiving a payment confirmation on payment of the invoice by the customer and providing an indication if the payment confirmation is not received until the due date. Further, the system includes a display unit for displaying, presenting and indicating data. In addition, the system has the capability of breaking down a contract price into one or more fixed or variable contract price pieces in an original currency of the contract, these contract price pieces are further broken down into invoicing events to form a detailed payment schedule.

In accordance with yet another aspect of the present invention a computer readable medium is provided. The computer readable medium embodies instructions which when executed by a computer, causes the computer to perform a method comprising defining a target date for invoice issuance for each of the invoicing events and defining a due date for a payment of the invoicing events by the customer. The method further includes issuing the invoice for the invoicing events to the customer by the target date for invoice issuance, providing a first input interface for receiving a issue confirmation for issuing the invoice, providing an indication if the issue confirmation is not received by the target date for invoice issuance, providing a second input interface for receiving a payment confirmation on payment of the invoice by the customer and providing an indication if the payment confirmation is not received until the due date.

### BRIEF DESCRIPTION OF THE DRAWINGS

The present invention is further described hereinafter with reference to illustrated embodiments shown in the accompanying drawings, in which:

FIG. 1 illustrates a flowchart depicting a computer implemented method for cash management;

FIG. 2 is a block diagram of an exemplary system for cash management;

FIG. 3 illustrates an exemplary screen depicting an exemplary tool for cash management;

FIG. 4 is a pictorial representation depicting a method for navigating to a "General Project Info" screen;

FIG. 5 illustrates a screen shot depicting a process of navigating to an "Escalation Formula" screen;

FIG. 6 illustrates an exemplary "Escalation Formula" screen for calculating an escalation formula for the invoicing events;

FIG. 7 illustrates a screenshot depicting a process of navigating to a "Money Boxes" screen;

FIG. 8 illustrates an exemplary "Money Boxes" screen;

FIG. 9 illustrates an exemplary "Money Box";

FIG. 10 illustrates a screenshot depicting a process to navigate to a "Build a Payment Schedule" screen;

FIG. 11 illustrates a portion of the "Build a Payment Schedule" screen;

FIG. 12 illustrates a screen shot depicting a method of adding / deleting rows in the "Build a Payment Schedule" screen of FIG. 11;

FIG. 13 illustrates a screen shot depicting the method of displaying columns related to "Target Dates for Invoice Issuance";

FIG. 14 illustrates a portion of the "Build a Payment Schedule" screen depicting a "Target Date Modifier" for the "Invoice Issuance Date" column and a "Target Date for Invoice Issuance" column;

FIG. 15 illustrates a screen shot depicting a method of approval of the Target Date for Invoice Issuance" (also referred to as "Target Date") by the management;

FIG. 16 illustrates another portion of the "Build a Payment Schedule" screen in which the "Target Dates" have been approved;

FIG. 17 illustrates a portion of the "Build a Payment Schedule" screen depicting the "Invoice Issuance Date" section;

FIG. 18 illustrates a portion of the "Build a Payment Schedule" screen depicting a Cash Received Date" section;

FIG. 19 illustrates another portion of the "Build a Payment Schedule" screen depicting a "Remarks" section;

FIG. 20 illustrates a portion of the "Build a Payment Schedule" screen for selecting "Key Invoice Event I" and Key Invoice Event II data;

FIG. 21 illustrates a portion of "Build a Payment Schedule" screen for calculation of a "Base Invoice Amount";

FIG. 22 illustrates a portion of the "Build a Payment Schedule" screen for including the "Escalation Amount";

FIG. 23 illustrates a portion of the "Build a Payment Schedule" screen depicting columns related to "Grand Total Invoice Amount";

FIG. 24 illustrates a screenshot depicting a method for generating reports in the exemplary tool;

FIG. 25 illustrates a portion of the "Contract Value Summary" screen with "Error Messages";

FIG. 26 illustrates a portion of the "Contract Value Summary" screen with "Warning Messages";

FIG. 27 illustrates a portion of the "Contract Value Summary screen depicting the "Summary of Financial Information" for the project;

FIG. 28 illustrates an exemplary "Billings and Cash Received" screen displayed by the tool;

FIG. 29 illustrates a "Capital Cost Calculation" screen;

FIG. 30 illustrates "Total Cumulative Actual and Forecasted Billings and Cash Received" chart;

FIG. 31 illustrates a chart depicting the total cumulative sales, costs and capital costs that were calculated on the "Capital Cost Calculation" screen; and

FIG. 32 illustrates a chart depicting the comparison between the budget and forecast for the billings and cash received amounts for a particular fiscal year by month, quarter, and cumulative.

### DETAILED DESCRIPTION OF THE INVENTION

Embodiments of the present invention relate to a computer implemented method and a system for cash management. It may be noted that the method can be implemented in a form of software tool using Microsoft® Excel, Microsoft® Visual Basic as development platforms, however, other development platforms such as, but not limited to Borland's Delphi, Powersoft's PowerBuider®, Microsoft ® Access and SAP development platform may also be used for implementing the method.

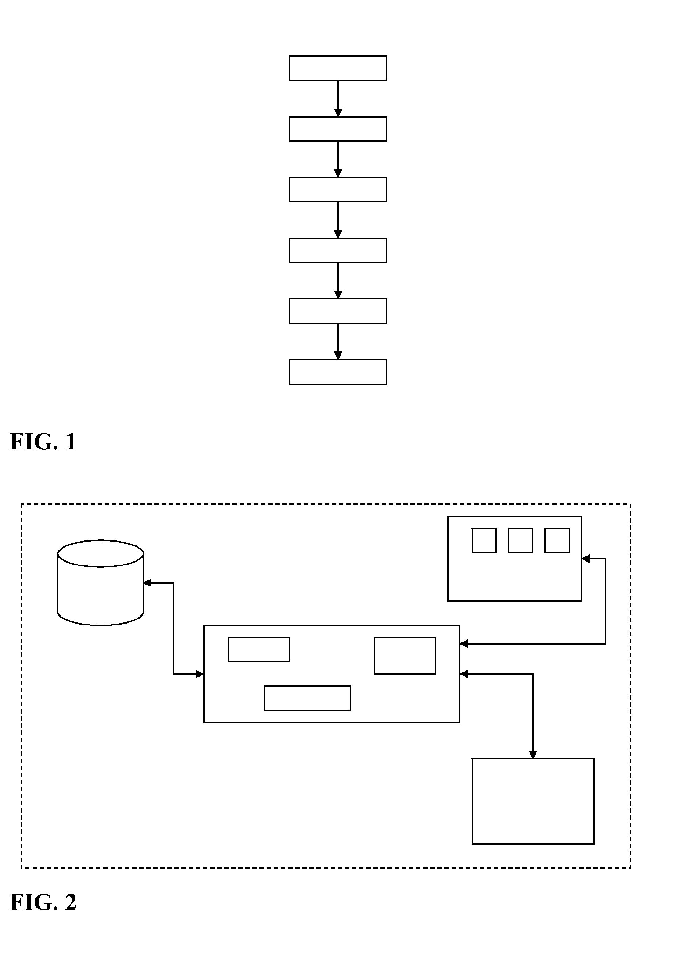

FIG. 1 is a flowchart 100 depicting a computer implemented method for cash management in accordance with the aspects of the present technique. At step 102, a "Target Date for Invoice Issuance" for each "Invoicing Event" is defined. As previously noted, an invoice includes one or more "Invoicing Events" which are issued to a customer in the form of an invoice for payment of the products or services rendered to the customer by a supplier or a vendor. The invoices are issued based on the terms of a contract for the project.

At step 104, a due date for a payment of the invoice by the customer is defined. As used herein, the term "due date" refers to a date on which the payment for an issued invoice has to be made by the customer. As an example, the due date may be thirty days from the receipt of the invoice document by the customer.

At step 106, the invoice is sent to the customer. In accordance with the aspects of the present technique, the invoice is sent either physically or electronically such as in the form of an attachment in an email, facsimile or in the form of an electronic document. The invoice for the "Invoicing Events" is sent to the customer by the "Target Date for Invoice Issuance" for payment of the invoice amount as defined in the payment terms of the contract.

Furthermore, at step 108 a first input interface for receiving an issue confirmation for issuance of the invoice is provided. As used herein, the term input interface may be defined as a piece of equipment or location at which information can be input from a device such as a computer. The first input interface may include a command line, such as a DOS prompt, a graphical user interface, a display device such as a monitor with touch screen capabilities, an audio interface or an audio-visual interface and so forth. At step 110, an indication is provided if the issue confirmation is not received by the "Target Date for Invoice Issuance". As an example, a message or dialog box comes up when an issue confirmation is not received by the "Target Date for Invoice Issuance". In another example, an indication such as a beep sound is generated by the computer system if the issue confirmation is not received by the "Target Date for Invoice Issuance".

In accordance with aspects of the present technique, a payment for the invoice which has been sent to the customer has to be done by the customer. At step 112, a second input interface is provided for receiving a payment confirmation on payment of the invoice by the customer. The second input interface may also be a visual interface, an audio interface or an audio-visual interface. As an example, the second input interface may be a display unit with touch screen connected to the computer system. Further, an indication is provided if the payment confirmation is not received until the due date. The indication may be a visual indication or an audio indication. A message box or a dialog box indicating that the payment has not been made by the customer may be regarded as an example of the indication.

It may be noted that the contract for a project includes a payment schedule according to which the invoices are generated. The payment schedule defines the "Target Date for Invoice Issuance" for the "Invoicing Events". In addition, the payment schedule also defines the due dates for payments by the customer for the issued invoices. In accordance with the aspects of the present technique, the payment schedule may be customized or parameterized. A customized payment schedule contains a series of dates which include the "Target Date for Invoice Issuance" and the due dates for the "Invoicing Events" and defines when the "Invoicing Events" have to be invoiced and when the payment has to be made for the issued invoice. Alternatively, a parameterized payment schedule may be based upon a set of rules or parameters. These parameters may include as an example a payment frequency, a payment due date, a "Target Date for Invoice Issuance" and so forth.

In addition, the payment schedule also includes a payment amount for the "Invoicing Events" set up in one or more currencies. As an example, the payment amount for the "Invoicing events" may be set up in a combination of both United States dollars and Euro. In accordance with aspects of the present technique, the computer implemented method provides flexibility to convert the payment amount from one currency to the other currency. A base currency may be defined to which the payment amount from the other currencies is converted. As an example, if the base currency is Euro and the other currencies are US dollar and Japanese Yen, the method provides for converting the US dollar and Japanese Yen to Euro.

Additionally, the method as described with reference to FIG. 1 also provides for calculating a capital cost and interest due to a non-payment of the issued invoice which is based upon a time period that is after the contractual due date for the payment. More particularly, the time period which may be the number of days past the due date for payment of the issued invoice is calculated and the capital cost and interest due to non-payment of the issued invoice from the customer is calculated there from either manually or automatically using interest calculating tools.

Furthermore, the method also provides for calculating a loss of capital interest due to not sending of the invoice by the "Target Date for Invoice Issuance". More particularly, a time period past the "Target Date for Invoice Issuance" is calculated. Thereafter, the loss of capital interest incurred due to not invoicing the "Invoicing Events" by the "Target Date for Invoice Issuance" is calculated which provides the vendor or the service provider the details of the incurred losses.

Additionally, the method provides for modifying the "Target Date for Invoice Issuance". The "Target Date for Invoice Issuance" may be modified to a new date which may be referred to as a modified forecast date if the "Invoicing Events" are not invoiced to the customer by the original "Target Date for Invoice Issuance". A third input interface is provided for modifying the "Target Date for Invoice Issuance" to the forecast date. The third input interface could be a visual interface, an audio interface or an audio-visual interface attached to the computer system.

FIG. 2 is a diagrammatical illustration of a system 200 for cash management in accordance with aspects of the present technique. The system 200 is a computer with software applications running on it. The system 200 may be a desktop computer, a laptop or a notebook computer or any other type of computer connected to a network 222, which may be either a wired network or a wireless network. The system includes a memory 202 for storing data related to a project for example. The memory 202 is a data storage device that may include a hard disk, a floppy disk, a DVD or any other type of data storage device. In addition, the system 200 includes an input device 204 for entering data. The input device 204 may include a keyboard, a mouse, a reader, a scanner and the like. As previously noted, data includes details related to the "Invoicing Events" which include the "Target Date for Invoice Issuance", the due date for a payment of the "Invoicing Events" by the customer, the payment amount and other details.

The system 200 includes a processor 206 connected to the input device 204 and an output device 208 wherein the output device 208 is a visual display unit such as a monitor, a printer, an audio-visual device and the like. Furthermore, the input device 204 includes one or more input interfaces such as, a first input interface 210, a second input interface 212 and a third input interface 214.

The processor 206 is configured to access data from the memory 202. The processor 206 is also configured to issue the invoice to the customer. More particularly, the processor 206 includes an invoice sending module 216 to issue the invoice for the "Invoicing Events" to the customer by the "Target Date for Invoice Issuance". In addition, the invoice sending module 216 is configured to record the number of days past the due date for the payment by the customer for the issued invoice. Furthermore, the processor 206 is configured to provide the first input interface 210 for receiving a sending confirmation for issuing the invoice, to provide an indication if the sending confirmation is not received by the "Target Date for Invoice Issuance", such as a warning message and providing the second input interface 212 for receiving a payment confirmation on payment of the invoice by the customer, an indication is provided such as a warning message if the payment confirmation is not received until the due date.

The processor 206 also includes an invoice generation module 218 for generating the "Invoicing Events". The "Invoicing Events" generated based on the terms and conditions defined in a contract, these terms and conditions are agreed to by the customer as well as the vendor or the service provider based on which the "Target Date for Invoice Issuance" and the due dates for payment are defined.

In accordance with aspects of the present technique, the processor 206 is further configured to modify the "Target Date for Invoice Issuance" for the "Invoicing Events" to a new date referred to as a modified forecast date if the "Invoicing Events" have not been invoiced to the customer by the original "Target Date for Invoice Issuance". More particularly, the third input interface 214 is used by the processor 206 to modify the "Target Date for Invoice Issuance" to the modified forecast date. As will be appreciated, the modified forecast date is greater than the original "Target Date for Invoice Issuance", for example if the "Target Date for Invoice Issuance" is July 1, 2010, the modified forecast date must be greater than July 1, 2010, that is, it should come after the "Target Date for Invoice Issuance", such as July 10, 2010. Hence, the invoice sending module 216 sends the invoice to the customer on the modified forecast date rather than the "Target Date for Invoice Issuance".

As previously noted, the system 200 includes the display unit 208 for displaying, presenting and indicating data. The display unit 208 is also configured to display the financial cost impact, the time period past the "Target Date for Invoice Issuance" and the time period past the due date. The processor 206 includes a report generation module 220 configured to generate reports for billings, cash received from the customer, the capital cost and interest incurred due to non-issuance of the invoice and the non-payment by the customer. The reports are displayed in the display unit 208.

The method as described with reference to FIG. 1 can be implemented as a software tool and stored in a computer readable media such as a DVD, a floppy disk a pen drive and the like. The tool includes setting up of an application file and a spreadsheet file. The tool includes three views or screens namely a "General Project Info screen", "Escalation screens and "Money Boxes" screen. Initially, the three screens are set up. A "Build a Payment Schedule" screen is set up thereafter.

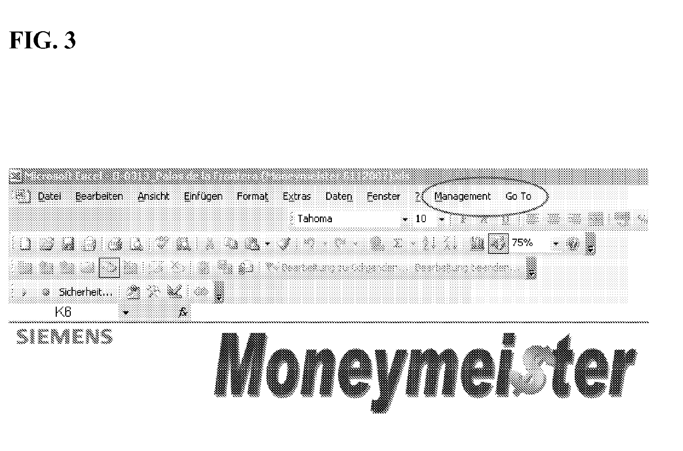

FIG. 3 illustrates an exemplary screen 300 depicting the main view of the tool at start up. As previously noted the tool is developed using Microsoft Excel and Microsoft Visual Basic. A menu bar 301 shows additional menu items "Go To" 302 and "Management" 304. For switching to different types of screen such as the "General Project Info screen", the "Escalation Formula" screens and the "Money Boxes" screen, the user has to click on the "Go To" 302 in the menu bar 301 and select a desired screen. In addition, the target issuance dates as well as an "Admin" menu can be accessed by clicking on the "Management" 304 menu item. When a menu item is clicked certain fields are accessible to the user and the other fields can only be accessed by a person having the administrator rights. These fields are generally the data entry fields. The data entry fields may also have a drop down menu, to allow the user to select an item for the field. As an example, in a data entry field for selecting a country. A drop down menu having list of countries is displayed which may be selected by the user.

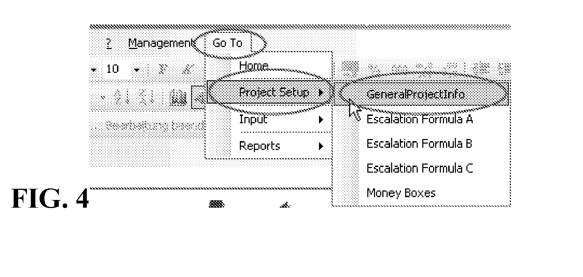

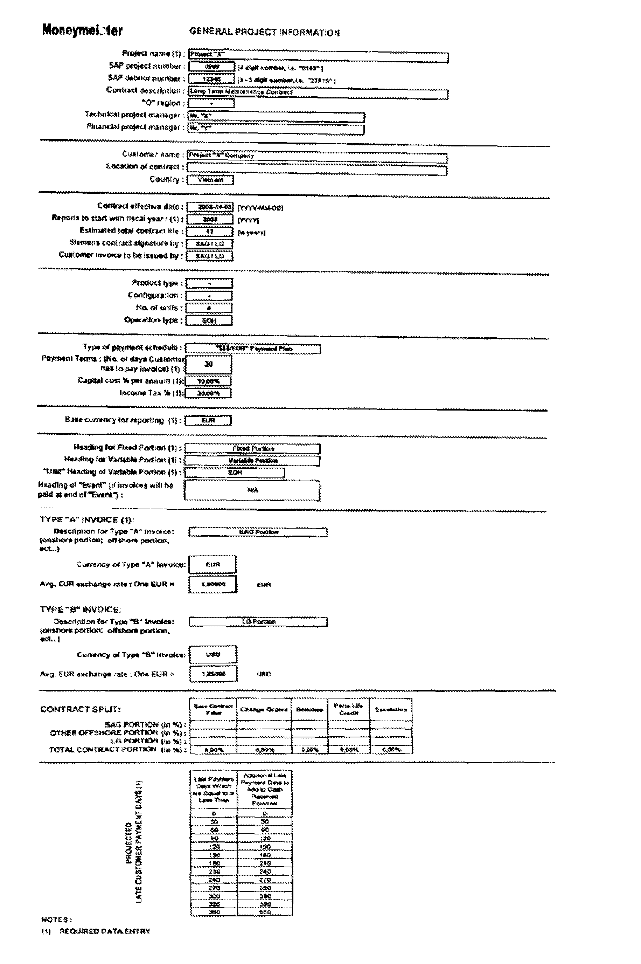

FIG. 4 is a pictorial representation depicting the menu bar 301 of the tool for navigating to the "General project info screen" 310. The user has to click on the menu item "Go To" 302 in the menu bar click on "Project Setup" and "General Project Info" to display the "General Project Info" screen 310. The "General Project Info" screen 310 allows the user to enter information about the project. The information includes, but is not limited to, such information as project name; project number; debitor number; contract description; technical project manager; financial project manager; customer name; location of contract; country; contract effective date; reports to start with calendar or fiscal year; contract signed by; customer invoice to be issued by; and so forth. In addition information related to product type; configuration; number of units; and operation type may be entered in the fields as illustrated in FIG. 4.

Furthermore, types of payment schedule and payment terms are to be specified in the designated field. In this field the number of days that the customer has to pay the invoice is included in the "customer payment terms". Up to three separate sets of customer payment terms can be accommodated, however, a minimum of one set of payment terms is a required field. Basically, the initial cash received forecast dates are calculated using the invoice date plus the number of days entered in the payment terms above. Also, if the contract terms state that the customer has "X" days to pay from receipt of the invoice, then an additional two or three days must be added to the contractual payment terms. Therefore, an additional mail delivery time will be taken into account in the calculation of the cash received forecast. In addition, fields related to capital cost percentage per annum and income tax has to be entered as this data is used in some of the financial reports.

With continuing reference to FIG. 4, a base currency for reporting has to be filled in the designated field. The required information for the "Base currency for reporting" will be used in the financial reports. The location of the country or region where the tool is being used will determine the base currency for reporting. As an example, if the tool is used in Germany, Euro would be selected as the base currency for reporting and if the tool is used in United States of America, then US Dollar would be selected. In addition, the "General Project Info" screen 310 contains fields specifying the headings for fixed and variable portions of a contract price. These headings will appear in "Money Boxes" in the "Money Boxes" screen which will be described later. As used herein, the term "contract price" is the price listed in the contract for the goods or services to be supplied by the vendor as defined in the work scope of the contract.

The field "Unit" heading for the variable portion must simply describe what the variable portion of the contract price is based upon, such as, equivalent operating hours (EOH), Starts, Widgets, etc. If invoices are based on "Invoicing Events" such as outages, then the field "Heading of the Event" can be entered. The tool allows the user to define up to three separate headings to describe additional price adjustments to the contract price. Such adjustments to the contract price could be change orders and/or bonuses. Also, the base contract value must be defined. The headings for the base contract value and the additional price adjustments to the contract price will appear in the "Money Boxes" in the "Money Boxes" screen.

The "General Project Info" screen 310 also provides for defining the types of invoices. As illustrated in FIG. 4, "Invoicing Events" can be defined as TYPE "A" "Invoicing Events" and TYPE "B "Invoicing Events". The following information is required for the TYPE "A" (and TYPE "B", if applicable) "Invoicing Events". A description of the "Invoicing Event" type such as, "offshore", "onshore", "service", "parts", "overhaul", "non-overhaul" and so on, the currency that the invoice will be issued in and the average exchange rate to convert the invoice currency back into the base currency which is an optional entry field.

It may be noted, that if the "Invoicing Events" are in more than one currency, then the invoices are to be categorized as both TYPE "A" and TYPE "B" invoices, because the "Invoicing Event" type may be used to distinguish between the currencies for reporting purposes. However, the user also has the option to segregate the "Invoicing Events" into TYPE "A" and TYPE "B" "Invoicing Events" even if the Invoicing Events" will only be invoiced in a single currency. For example, if the contract price is split between "Parts Supply" and "Installation Labor" "Invoicing Events", the user could categorize the "Parts Supply' "Invoicing Events" as TYPE "A" "Invoicing Events" and the "Installation Labor" "Invoicing events" as TYPE "B" "Invoicing Events". These TYPE "A" and TYPE "B" "Invoicing Events" will then be able to be shown separately on various reports.

The "General Project Info" screen 310 has an option to split the contract. A table 312 is provided in which the base contract price; the adjustments to the contract price; and escalation can be split into a percentage breakdown for the company portion; the other offshore portion (if applicable); and the regional office portion (if applicable). It must be noted that the total must be equal to 100%. This percentage breakdown is used for the reports which appear in a "Contract Summary" screen which will be described later.

Additionally, a table 320 for adjusting the forecast for customer payments which are overdue is also displayed. A first column 322 of the table 320 contains the number of payment days which the customer has exceeded in accordance to the terms of the contract. A second column 324 of the table 320 contains the number of additional days that will be added to the forecasted date of customer payment from the date of the invoice. Basically, the more days that the customer is overdue on his payment, the further the customer payment date will be automatically moved into the future. The table 320 can be adjusted to fit the situation of a specific customer, if necessary. It may be noted that the tool also provides a functionality to enter an item in a field if the same is not present in the drop down menus of the selected fields.

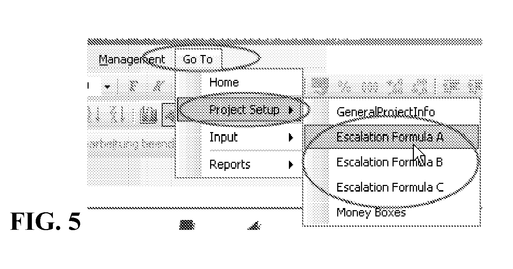

FIG. 5 illustrates a screen shot depicting a process of navigating to an "Escalation Formula" screen. The user has to click on the item "Go To" 302 in the menu bar 301, click on "Project Setup" 306 and then select an option for "Escalation Formula A" 308, "Escalation Formula B" 312 or "Escalation Formula C" 314. On selection the user is directed to the respective "Escalation Formula" screen. The "Escalation Formula A; B; and C" screens allow the user to set up to three separate escalation formulas for projects which have contract terms that allow the base contract price to be escalated. The "Escalation Formula A" screen allows the user to set up an escalation formula if the contract requires "Invoicing Events" to be calculated with only one escalation formula. The "Escalation Formula B" screen allows the user to set up a second escalation formula if the contract requires certain "Invoicing Events" to be calculated with a second, separate escalation formula. The "Escalation Formula C" screen allows the user to set up a third escalation formula in case that the contract requires certain "Invoicing Events" to be calculated with a third, separate escalation formula. The tool is also configured to calculate a forecasted escalation value for the amount remaining as per the contract amount which, for example, has not yet billed to the customer or has not been manually escalated.

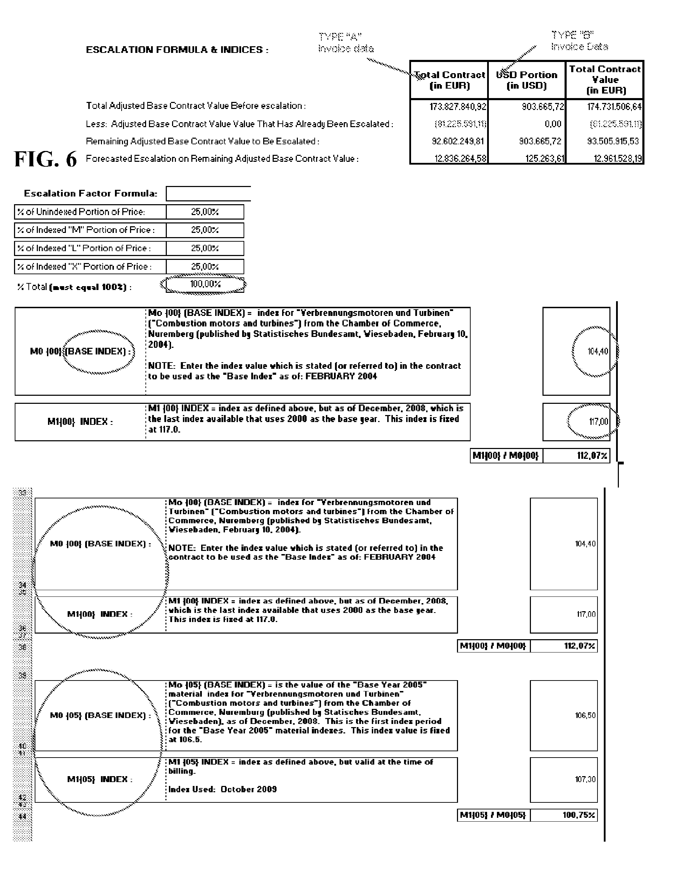

FIG. 6 illustrates an exemplary "Escalation Formula" screen 400 for calculating the escalation formula for the "Invoicing Events". As illustrated in FIG. 6, the "Escalation Formula" screen 400 shows three columns depicting the Type A "Invoicing Event" data 402 and the Type B "Invoicing Event" data 404 and the total contract value 406. The "Escalation Formula" screen 400 also includes rows defining total adjusted base contract value before escalation 408, adjusted base contract value that has already been escalated 410, remaining adjusted base contract value to be escalated 412 and forecasted escalation on remaining adjusted base contract value 414. As illustrated in FIG. 6, the user must enter the percentage breakdown of the escalation formula 416 that is applicable to each type of index, such as for example material, labor, and so forth. In addition, the applicable percentage for the portion of the contract price which is not escalated or the portion of the contract that is fixed should be entered. The user must also enter a base index 418 and current index 420 values for each escalation index component for example, a material index, a labor index and so forth. Furthermore, if the escalation formula is not used then the base index value should be entered as 1, indicating an absence of escalation formula.

In accordance with aspects of the present technique, the "Escalation Formula" screen 400 allows the user to enter up to three base indexes 418, 422, 426 or current sets of material indexes 420, 424, 428; up to two sets of base Labor indexes 430, 434 or current Labor indexes 432, 436 and up to two sets of base or current other indexes (not shown in FIG. 6). The results of each of the three sets of material indexes are multiplied together to give a combined "material" index result. The results of each of the two sets of "labor" indexes are multiplied together to give a combined "labor" index result. The results of each of the two sets of "other" indexes are multiplied together to give a combined "other" index result. The total combined escalation percentage is derived from the results of the change in the base index value divided by the current index value for various sets of material; labor and "other" indexes. Thereafter, these results are multiplied by the applicable contractual percentages for the "fixed", "material", and "labor" portions. A total of escalation percentage 438 is displayed on the screen as depicted.

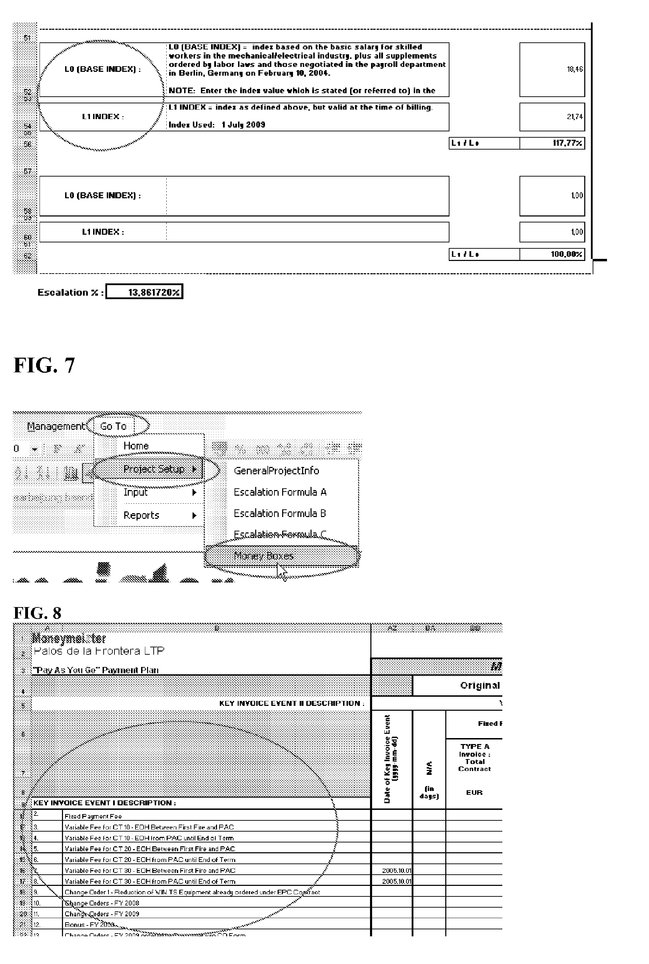

Referring now to FIG. 7, a screenshot depicting a process of navigating to a "Money Boxes" screen is depicted. The user has to click on the menu item "Go To" 302 in the menu bar 301, click on the "Project Setup" 306 and click on menu item "Money Boxes" 316 to display the "Money Boxes" screen. The "Money Boxes" screen is a multi-dimensional grid that allows the contract price to be broken down into large, fixed and/or variable contract price pieces in the original currency of the contract. These "Contract Price Pieces" act as control values which are then further broken down into detailed, separate "Invoicing Events" on a "Build a Payment Schedule" screen. These detailed "Invoicing Events" form the detailed payment schedule for the contract. The set up of the "Invoicing Events" in the "Build a Payment Schedule" screen will be explained in later sections.

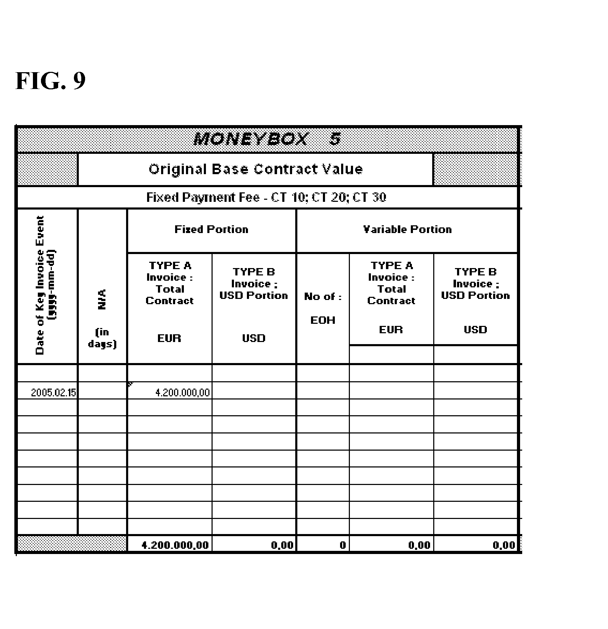

FIG. 8 illustrates an exemplary "Money Boxes" screen 500 in accordance with aspects of the present technique. The "Money Boxes" screen 500 includes a plurality of "Key Invoicing Event Description I" 502 which have to be entered by the user, these "Key Invoicing Event Description I" 502 are associated with the "Contract Price Pieces that will be entered in the "Money Boxes" which will be described in greater detail with reference to FIG. 9. It may also be noted that each "Key Invoicing Event Description I" 502 is unique.

FIG. 9 illustrates a "Money Box" 510 in accordance with aspects of the present technique. The "Money Box" 510 is a part of the "Money Boxes" screen 500 (see FIG. 8). The "Money Box" 510 includes a data entry field 512 with a drop down menu which allows the user to designate the "Money Box" and contains one or several "Contract Price Pieces" that is/are a part of the original base contract value, or an additional price adjustment to the contract price. The selection is defined by the user on the "General Project Info" screen 310 as described with reference to FIG. 4. The entire original base contract value may be put into a single "Money Box", however, multiple "Money Boxes" should be used if there are several components in a contract such as a gas turbine, trains etc. In such a case the "Key Invoice Event II Descriptions" will have to be split up for each of the component. Alternately, if the project has more components than the "Money Boxes" then the "Key Invoicing Event Description I" could be used to enter unique descriptions for each of the components.

Further, a "Contract Price Piece" which is an adjustment to the base contract price should be put into a separate "Money Box". Adjustments to the base contract price may include change orders, bonuses and so forth. As illustrated with reference to FIG. 9, an entry field 514 for a unique description to be given to each "Key Invoice Event Description II" category. The "Money Box" 510 includes seven columns for entering information that is necessary for the "Contract Price Pieces". A first column 516 contains a "Date of the Key Invoicing Event." The dates entered herein would be considered as a "base date" in which the "Target Date for Invoice Issuance" for each Invoicing Event" related to a "Contract Price Piece" is calculated which is "X" number of months before the "Key Invoicing Event Date" or "X" number of months after the "Key Invoicing Event Date". More particularly, the difference between the "Target Date for Invoice Issuance" and the "Key Invoicing Event Date" is calculated in months. The date entered in the first column 516 would either be the date which on which the invoicing for the "Contract Price Piece would start, or, the date on which the event for "Contract Price Piece" begins, if the invoicing for the "Contract Price Piece" is based on events, such as an outage.

A second column 518 is for entering a number of days for the length of the event. These days can be used to further aid in the calculation of a "Target Date for Invoice Issuance" for a particular "Invoicing Event" on a "Build a Payment Schedule" screen when, for example, the "Invoicing Event" is to be invoiced upon the completion of an outage. A third column 520 is for entering "Type A" invoice fixed base price portions in the original currency of the contract. A fourth column 522 is for entering "Type B" invoice fixed base price portion in the original currency of the contract. As used herein, the term fixed portion of the base contract price is defined as a portion of the contract for which the base price remains fixed, that is, it is not dependent on a price per unit. As an example, a total down payment amount is a fixed price because it is an agreed upon amount that will not change. A price for the completion of a service overhaul or a component are also examples of fixed prices, if the prices are an agreed upon amount that will not fluctuate. A description for the fixed base price portion is entered above the third column 520 and the fourth column 522. Normally, the description should say something to the effect of "Fixed Portion" as represented by reference numeral 530. However, the user could translate this description in to another language. Alternatively, a further detailed description such as "Fixed Milestone Payments" could be used, if the user so desires. In any case, the base price amounts entered in the third column 520 and the fourth column 522 must be for fixed base price amounts.

A fifth column 524, a sixth column 526 and a seventh column 528 in the "Money Box" 510 is for information required for a variable portion 532 of the base contract price. As used herein, the term "variable portion" of a "Contract Price Piece" is defined as that portion of the "Contract Price Piece" which can be billed as a unit price. A "unit" could be the equivalent operating hours ("EOH") that are used to bill some of the long term service contracts for a division in a company. Alternatively, a "unit" could be a standard part or other component, a man hour, or even a liter of a liquid. Additionally, a "unit" has to have a price associated with it. In the fifth column 524, the total number of units to be calculated for the variable contract price piece is entered. The base contract price per variable unit is entered in the sixth column 526 and the seventh column 528 in the original currency of the contract. It may be noted that the "Type A" invoice variable portions are calculated in the sixth column 526 and the "Type B" invoice variable base portions are calculated in the seventh column 528.

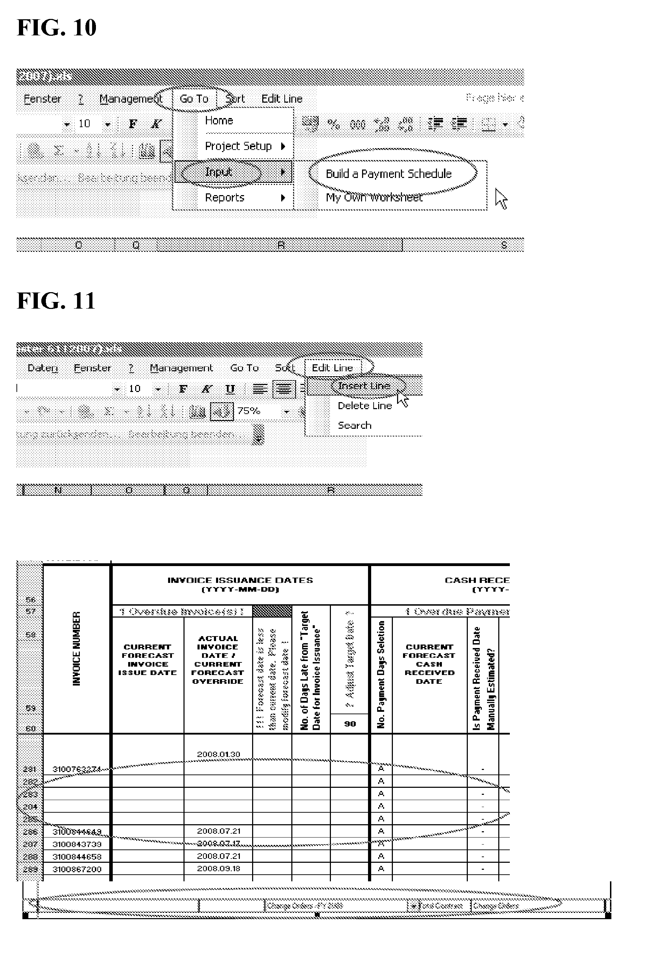

FIG. 10 illustrates a screenshot depicting a process to navigate to a "Build a Payment Schedule" screen. The user has to click on menu item "Go To" 304 in the menu bar 301, click on "Input" 305 and thereafter click on the menu "Build a Payment Schedule" 550 to display a "Build a Payment Schedule" screen. The "Build a Payment Schedule" screen is used to break the large "Contract Price Pieces" that were entered into each of the "Money Boxes" on the "Money Boxes" screen 500 into detailed, separate "Invoicing Events" to form a detailed payment schedule. As used herein, an "Invoicing Event" is defined as the smallest portion of the contract price which can be separately calculated. Each "Invoicing Event" could be invoiced separately to the customer. However, often is the case that multiple "Invoicing Events" are invoiced together on a single customer invoice.

In addition, the "Build a Payment Schedule" screen is used to track actual invoices issued and actual payments received, calculate billings and cash received forecast for outstanding invoices and customer payments, and convert foreign currency invoices to the base currency used for internal reporting purposes. The "Build a Payment Schedule" screen includes thirteen columns. The "Invoicing Events" are displayed in rows. The rows for the "Invoicing Event" may be added or deleted based on the requirements of the project. FIG. 11 illustrates a portion of the "Build a Payment Schedule" screen 560. In addition, FIG. 11 also depicts the method of adding or deleting a row in the "Build a Payment Schedule" screen 560. As illustrated, this may be achieved by placing a cursor anywhere on the row where an additional row has to be inserted. On the menu bar 301 select menu items "Edit Line" 562 and "Insert Rows" 564 at the top left of the screen 560 and a new row will automatically be inserted (including the cell formulas). With continuing reference to FIG. 11, at the bottom of the "Build a Payment Schedule" screen 560 there is a single row 570 that can be filled out by the user. The information from the single row 570 is copied into the additional rows that are inserted. This single row 570 feature is extremely beneficial in the set up of initial payment schedules if the payment schedule has many "Invoicing Events" that are similar.

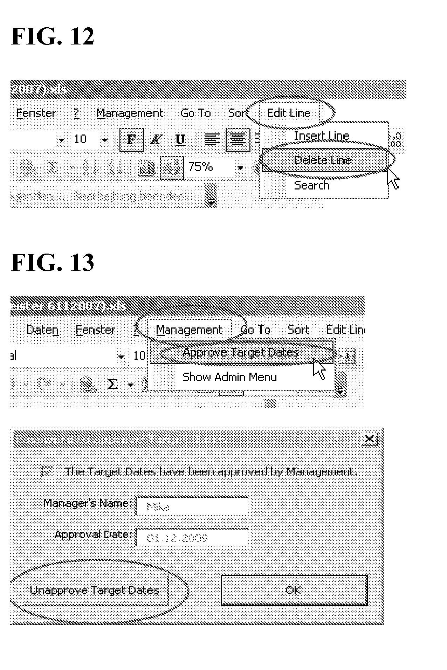

FIG. 12 illustrates a screen shot depicting a method of deleting rows in the "Build a Payment Schedule" screen 560 of FIG. 11. The rows may be deleted by selecting "Edit Line" 562 and "Delete Line" 566 from the menu bar 301 as depicted.

The "Build a Payment Schedule" screen 560 of FIG. 11 includes column related to "Target Date for Invoice Issuance" for the "Invoicing Events", which may also be referred to as "Target Date" and is based on the forecasting of invoicing and customer payments. The design objective of the "Target Date for Invoice Issuance" feature is to make the on-time issuance of invoices a top priority in the cash management process because late invoice issuance reduces economic value added (EVA) and also has a negative effect on the cash flow forecasting. A "Target Date for Invoice Issuance" for each "Invoicing Event" is set up at the beginning of a project by a financial project manager and is approved and locked by management. The "Target Dates for Invoice Issuance" become the initial invoicing forecast for the project. These "Target Dates for Invoice Issuance" can also be adjusted during the project and re-approved by the management, should there be a change in the parameters of the project. If an "Invoicing Event" has not been invoiced by its "Target Date for Invoice Issuance" , the tool will display a warning message with the number of late invoice days as well as the financial (capital cost) impact incurred. A modified forecast date for the date in which the "Invoicing Event" is anticipated to be invoiced must be entered by the user; however, the invoice is still marked as "late" until the invoice is actually issued. Therefore, the tool gives a constant reminder to the user to issue the invoice. In addition, a summary report for all projects can be generated in order to keep management informed of the status of late invoicing.

FIG. 13 illustrates a screen shot depicting the method of displaying the columns related to the "Target Dates for Invoice Issuance". The columns related to "Target Dates for Invoice Issuance" are displayed by clicking on the menu item "Management" 302 and selecting "Approve Target Dates" 572. The "Target Date" may either be approved or unapproved by clicking the buttons 578, 576 respectively on a dialog box 574.

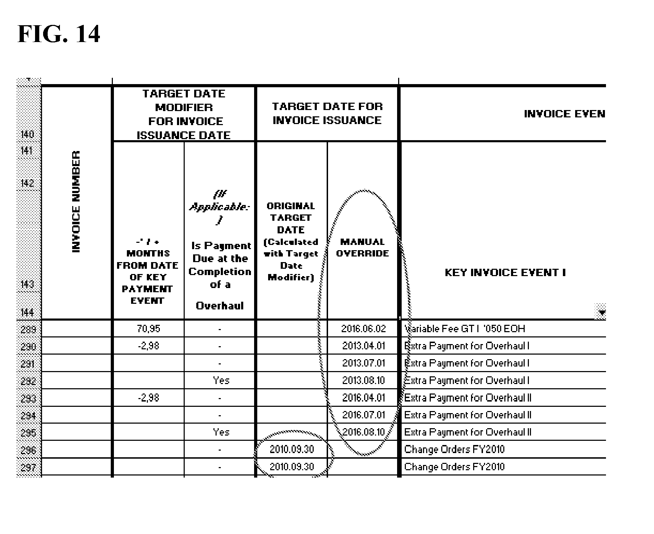

FIG. 14 illustrates a portion 600 of the "Build a Payment Schedule" screen depicting a "Target Date Modifier for Invoice Issuance Date" column 602 and a "Target Date for Invoice Issuance" column 603. In the "Build a Payment Schedule" screen, the "Target Date Modifier" and the "Target Date for Invoice Issuance" columns have to be set up. This is achieved via the "Key Date for Invoicing Events" which were entered on the "Money Boxes" screen 500 and is adjusted for each specific invoice using the "Target Date Modifier for Invoice Issuance Date" column 602 on the "Build a Payment Schedule" screen. A number of months are entered in a month column 604 which are either further or prior to the issuance date for each "Invoicing Event" will vary from its "Key Date for Invoicing Events". This adjusted date will appear in the column labeled "Target Date for Invoice Issuance" 603. As illustrated, the number of months from the date of "Key Date for Invoicing Event" is entered in month column 604. It may be noted that the number of months can also be entered as partial months. Furthermore, a manual override column 606 for entering the "Target Date" manually and an invoice number column 608 wherein an actual invoice number must be entered when an invoice has actually been issued.

In accordance with aspects of the present technique, if the "Invoicing Events" will be invoiced on a monthly basis, the "Target Dates for Invoice Issuance" for each month as can be quickly calculated as follows: First, in the "Target Date Modifier" column 602, enter the first month as numeral 1. Second, for the remaining months, enter a formula which refers to the cell in the above row plus "1". Third, make the appropriate adjustments to fine tune the "Target Date Modifier" to reflect the desired invoice dates. Finally, it is essential that any formulas in the "Target Date Modifier" column 602 be copied over as values because the formulas will cause errors if the invoices are sorted. After the months for a set of "Invoicing Events" have been entered and properly adjusted under the "Target Date Modifier" month column 604, the months can simply be copied to a similar set of "Invoicing Events". For example, if a payment schedule is set up for two machines that will be invoiced separately, then the months can be set up in the "Target Date Modifier" months for the first machine and then simply copied for the second machine. Should a "Target Date for Invoice Issuance" be related to a completion of an event, the user can click on the drop down menu in a column 610 marked "Is the payment due at the Completion of...." and select an option "Yes". The program will then add the additional number of days that were entered in the second column of the money box on the "Money Boxes" screen to the Target Date for Invoice Issuance". Upon finalization of the "Target Dates for Invoice Issuance", the user may copy the values of the calculated "Target Dates for Invoice Issuance" from column 612 into the manual override column 606. This will ensure that the "Target Dates for Invoice Issuance" are "frozen" after being approved by management and can no longer be manipulated by changing the "Date of Key Invoice Event" on the "Money Boxes" screen.

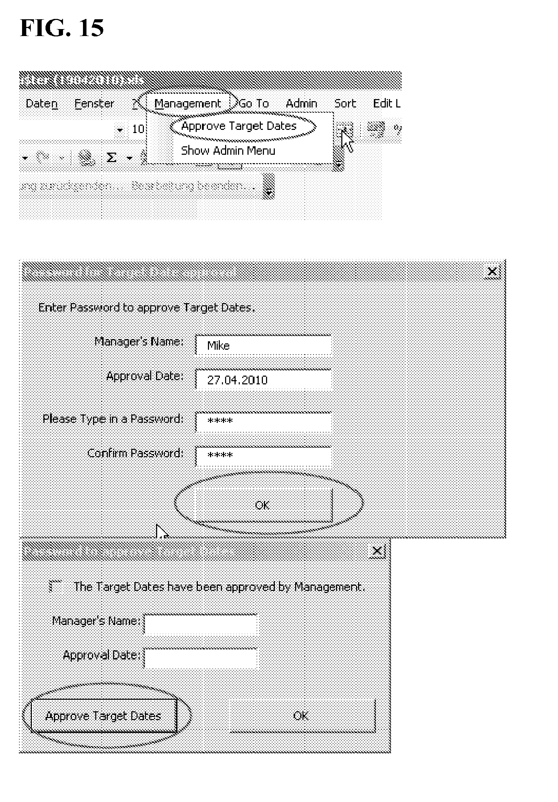

FIG. 15 illustrates a screen shot depicting the method of approval of "Target Dates for Invoice Issuance" by the management. After the user has set up the "Target Dates for Invoice Issuance" for the project, these "Target Dates for Invoice Issuance" must be approved by the management. A manager must select from the menu bar 301 at the top left of the screen the menu "Management" 302 select "Approve Target dates" 572. A "Password to Approve Target Dates" box 622 will appear. The manager must then click on the "Approve Target Dates" button 624 on the lower left side of the box 622. The "Password for Target Date Approval" box 630 will now appear. The manager must type in their name, an approval date, a password and a reconfirmation of the password. Then the manager must click on the "OK" button 632. The box 622 labeled "Password to Approve Target Dates" will now appear with a "checkmark" 626 stating that the "Target Dates for Invoice Issuance" have been approved by management. By clicking on the "OK" button 634 the box 622 will disappear.

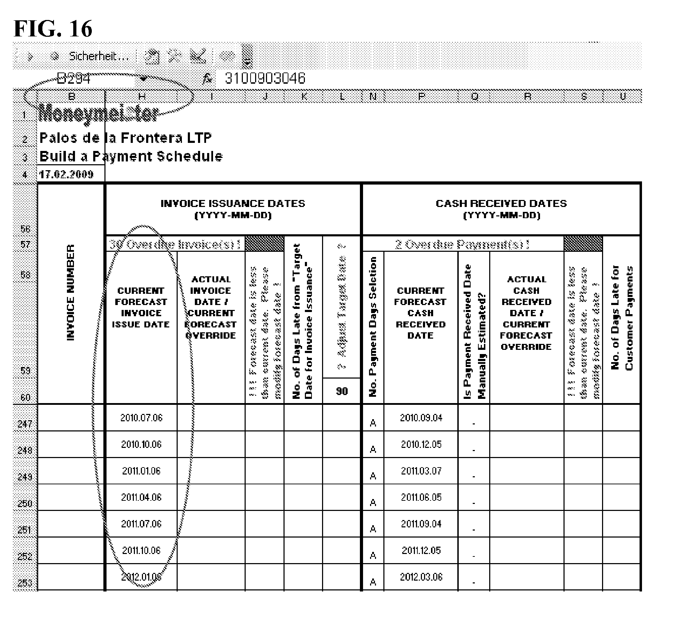

FIG. 16 illustrates another portion 650 of the "Build a Payment Schedule" screen in which the "Target Dates for Invoice Issuance" have been approved. As illustrated, an "Invoice Issuance Dates" section 652 and "Cash Received Dates" section 654 is now displayed. Please note that the "Target Dates for Invoice Issuance" will now appear in the "Invoice Issuance Dates" section as the forecasted invoice issuance dates for the "Invoicing Events".

In some cases the "Target Dates for Invoice Issuance" may require adjustment during the project if there is a legitimate change in the project (such as a delay) that would necessitate a change in the "Target Dates for Invoice Issuance". The existing "Target Dates for Invoice Issuance" would first have to be unlocked by management, as described with reference to FIG. 15, the manager must select from the menu at the top left of the screen the menu "Management" select "Approve Target dates" the "Password to Approve Target Dates" box will appear. The manager must then click on the "Unapprove Target Dates" button on the lower left side of the box (not shown in FIG. 16). Another box will appear requesting the manager to enter the same password that they had entered when the "Target Dates for Invoice Issuance" were first approved.

If the "Target Dates for Invoice Issuance" have been copied into the "Manual Override" column, the "Manual Override" data will have to be deleted before the "Target Dates for Invoice Issuance" can be modified. These "Target Dates for Invoice Issuance" must then be re-approved by management in the same manner as has been explained above with reference to FIG. 15.

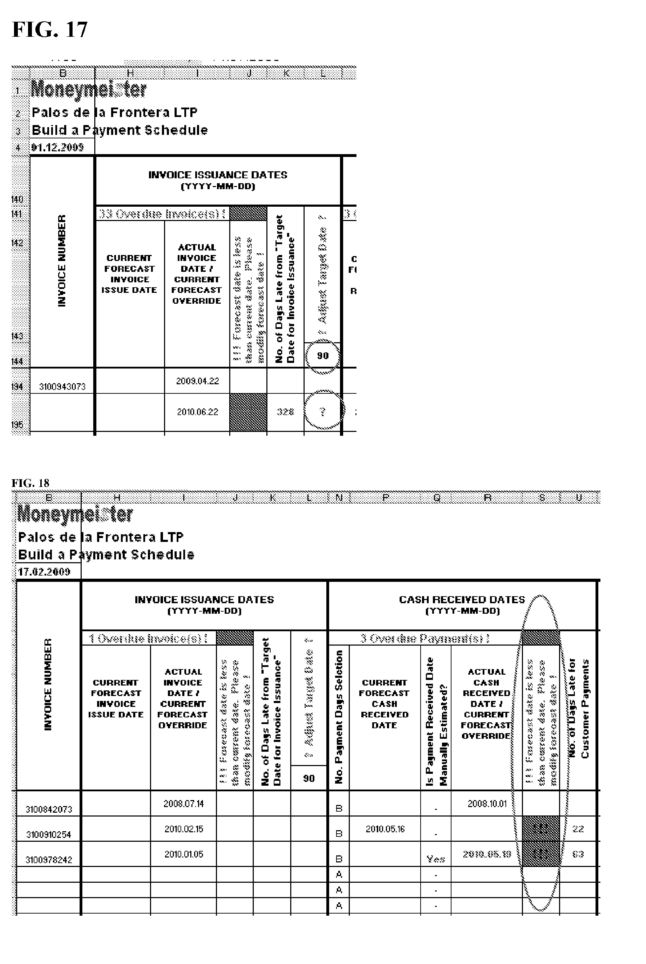

FIG. 17 illustrates a portion 660 of the "Build a Payment Schedule" screen depicting the invoice issuance dates section 652. For an issued invoice, which has been mentioned in the invoice number column 662, the user must type in the actual date of invoice issuance in a column 664 for actual invoice date. Alternately, if the "Invoicing Events" have not been invoiced, the "Target Date for Invoice Issuance" for the "Invoicing Events" will appear in column 666 having the label "Current Forecast Invoice Issue Date" as depicted. If the "Invoicing Events" were not invoiced by their "Target Date for Invoice Issuance", a red box with an "!!!" symbol will appear in a warning column 668 and the number of late invoice issuance days from the original "Target Date for Invoice Issuance" will appear in column 670 labeled number of days late from the "Target Date for Invoice Issuance".

In accordance with aspects of the present technique, a new forecast date has to be entered in the column labeled current forecast invoice issue date indicated by reference numeral 666. It may be noted that the forecast date must be greater than the current calendar date. On entering the modified forecast date, the red box will still remain, but will not have "!!!" symbol and the number of late invoice issuance days from the original target date will appear in column 670 labeled number of days late from the "Target Date for Invoice Issuance." Additionally, if the modified forecast date exceeds a number of pre defined tolerance days from the "Target Date for Invoice Issuance" of the invoice then a symbol such as '?' will be displayed in a column 672 labeled "Adjust Target Date ?", asking the user whether the "Target Date for Invoice Issuance" needs to be adjusted and re-approved by the management. It may be noted that the symbol '?' appearing in the column does not imply an error message and the number of tolerance days from the "Target Date for Invoice Issuance" can be adjusted.

In addition, the exemplary tool also has the capability to sort the invoices based on the invoice dates in ascending or descending manner.

FIG. 18 illustrates a portion 650 of the "Build a Payment Schedule" screen depicting a cash received dates section 654. The cash received dates section 654 includes six columns. A current cash received forecast date will be determined by the invoice issuance date, plus the number of days that the customer has to pay the invoice, as is stipulated in the contract. In most cases, the customer has the same amount of time to pay all invoices, such as, for example, thirty days from receipt of invoice. However, there are contracts in which the customer has, for example, thirty days to pay the monthly fixed fee invoices and sixty days to pay the quarterly variable fee invoices. Therefore, the tool has been designed to accommodate one or more separate customer terms of payment. As previously noted with reference to FIG. 4, these payment terms are entered in the "General Project Info" screen. The user can select the payment terms applicable from a drop down menu in column indicated by reference numeral 682.

If the customer has paid the invoice, the actual date of payment is entered in the column indicated by reference numeral 688 and the forecast date in the column 684 labeled current forecast cash received date will be overridden. If the invoice is overdue for payment, the number of late days from the current calendar date appears in column indicated by reference numeral 692. In addition, the forecasted payment date in column 684 labeled current forecast cash received date is automatically adjusted forward as per a table called "Projected Late Customer Payment Days" which is located near the bottom of the "General Project Info" screen (see FIG. 4). If either the calculated or the manual override forecasted customer payment date is less than the current calendar date, then a "!!!" symbol will appear in column indicated by reference numeral 690 to symbolize that the estimated forecast date for the customer payment is in the past. A new estimated forecast date for the customer payment must then be entered in column 688 labeled actual cash received date /current forecast override which must be greater than the current calendar date. Alternatively, the "Projected Late Customer Payment Days" table on the General Project Info" screen may be adjusted. Once the revised future customer payment forecast date has been entered, the "!!!" symbol will disappear. The tool has the capability to sort the cash received date in an ascending or descending order.

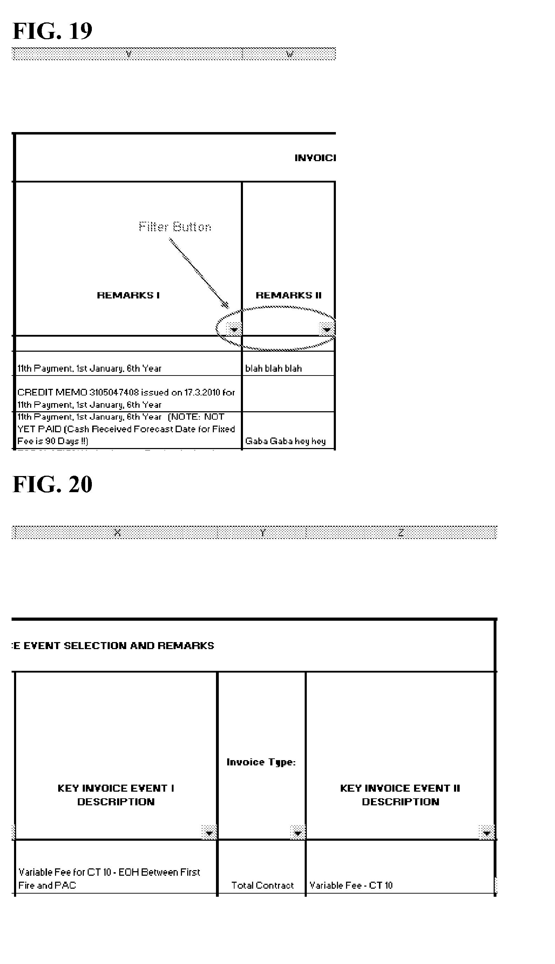

Referring to FIG. 19, a portion 700 of the "Build a Payment Schedule" screen is depicted where the remarks section is displayed. The remarks section contains two columns 702, 704 for entering a remark by the user about an "Invoicing Event."

FIG. 20 illustrates a portion 710 of the "Build a Payment Schedule" screen for selecting the "Key Invoice Event I", "Key Invoice Event II"; and "Invoice Type" ("Type A" or "Type B" for each of the "Contract Price Piece" that were entered into the "Money Boxes" on the "Money Boxes" screen (see FIG. 8) so that a detailed payment schedule can be developed for the project. By clicking on the data entry fields in the column 712 labeled "Key Invoice Event I Description" and a drop down menu will appear with all of the "Key Invoice event I Descriptions" which were entered in the rows at the far left of the "Money Boxes" screen. The user can select the appropriate description by clicking on it. By clicking on the data entry fields in a column 714 labeled "Invoice Type" a drop down menu will appear with the two "Invoice Type" descriptions which were entered on the "General Project Info" screen. The user can select the appropriate invoice type description for the particular "Invoicing Event" by clicking on it. By clicking on the data entry fields in a column 716 labeled "Key Invoice Event II Description" a drop down menu will appear with all of the "Key Invoice Event II" descriptions for the categories of the "Money Boxes" which were entered on the "Money Boxes" screen. The user can then select the appropriate description by clicking on it. It may be noted that a correct combination for the "Key Invoice Event I"; Key Invoice Event II"; and "Invoice Type" must be selected by the user for each "Contract Price Piece" that were entered into the "Money Boxes". A wrong combination will result in an incorrect total payment schedule value and the user will receive error messages.

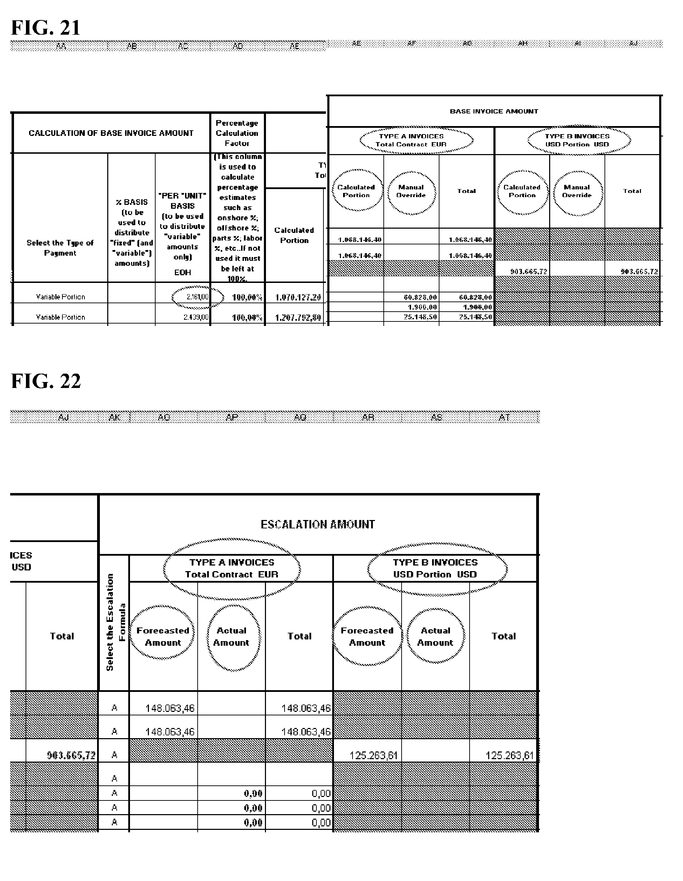

FIG. 21 illustrates a portion 720 of the "Build a Payment Schedule" screen for calculation of a base invoice amount 722. The user has to click on data entry fields in a column 724 labeled "Select the Type of Payment" and a drop down menu will appear with selections for "fixed" and "variable" portions that the user had entered on the "General Project Info" screen, which then appear in the "Money Boxes" and select the appropriate description for the "Invoicing Event" by clicking on it. If the base amount for the "Invoicing Event" is a "fixed" amount, then enter a percentage in the data entry fields of the column 726 labeled "% BASIS (to be used to distribute "fixed" (and "variable") amounts)". This percentage will be multiplied by the total amount associated with the "Invoicing Event" related to the its particular "Contract Price Piece", which was entered on the "Money Boxes" screen. It should be noted that the total percentage for all of the "Invoicing Events" related to the "Contract Price Piece" must be equal to 100%. If the base amount for the "Invoicing Event" is a "variable" amount, then enter the number of "units" in the data entry fields of a column 728 marked "PER UNIT BASIS". The tool will multiply the number of units by the "per unit" price associated with the Invoicing Event related to the "Contract Price Piece" entered on the "Money Boxes" screen. The total of the "units" for all of the "Invoicing Events must equal the total of the units related to the "Contract Price Pieces", that are entered on the "Money Boxes" screen. If the "units" for the actual invoiced "Invoicing Event(s)" vary from what was estimated for the forecasted "Invoicing Event", then the "units" in the remaining forecasted Invoicing Events" will have to be adjusted in order that the total "units" for the "Invoicing Events" on the "Build a Payment Schedule" screen will match the control "units" of the related "Contract Price Pieces" in the "Money Boxes" screen., otherwise the user will receive an error message..

The base amounts for the Type "A" and Type "B" "Invoicing Events" are shown separately in columns 732, 734 as depicted. The base amount may either be an automatically calculated amount or a manual amount that is entered by the user. The calculated base invoice amount is the amount that has been calculated. A manual override of the base invoice amount has been provided in the case that the user needs to override the calculated base invoice amount. However, as a general, rule, the manual override should only be used if the base amount can not be calculated. For example, a group of change orders can be entered as a total amount in one "Money Box." However, when the change orders are individually broken down into separate "Invoicing Events" for each change orders on the "Build a Payment Schedule" screen, then they must be entered as manual override base invoice amounts. Also, there may be instances where a slight rounding error on a calculated base invoice amount that could be corrected by entering the actual amount as a manual override.

FIG. 22 illustrates a portion 740 of the "Build a Payment Schedule" screen for including the escalation amount 742. The associated escalation for the base amounts for the Type "A" and Type "B" "Invoicing Events" are shown separately in columns depicted by reference numerals 744, 746. The escalation amount may either be an automatically calculated amount or an actual amount entered manually by the user. For this the type of escalation ("A", "B", or "C") from the drop down menu is selected and the escalation percentage that was calculated on the escalation screens will be multiplied by the base value of the invoice. Alternatively, if an invoice has been issued to the customer, the actual amount of the escalation must be entered in the "Actual Amount" column in order to override the calculated amount, even if the actual escalation is "0". There may also be situations where the user may want to override the calculated escalation for an "Invoicing Event" that will be invoiced in the future. For example, change orders are typically not escalated because the escalation is already included in the base price, therefore, a "0" could be entered in the actual escalation column to override the calculated escalation. Another example would be a case where there is disputed escalation. In such cases, the base amount before escalation could be entered as a separate "Invoicing Event". Then, the escalation for this "Invoicing Event" could be manually entered as its own "Invoicing Event" to be invoiced separately in the future.

The tool also includes two columns 747, 748 depicting the total amounts of the "Invoicing Events" in the original contract currency (or currencies) of the invoice.

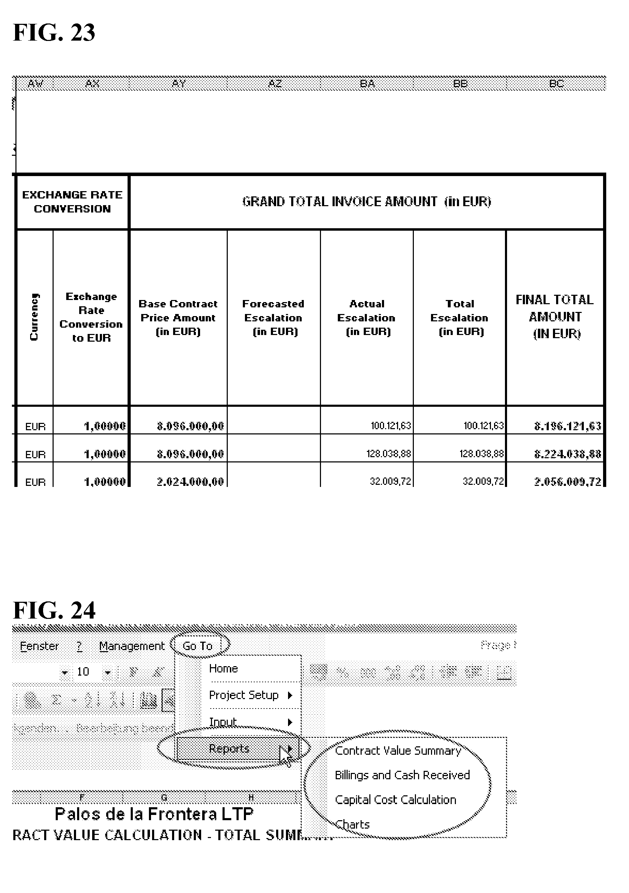

FIG. 23 illustrates a portion 750 of the "Build a Payment Schedule" screen depicting columns related to grand total invoice amount. As previously noted, the amounts for each of the "Invoicing Events" are converted from the currency of the contract to the currency used for internal finance reporting. These amounts are subdivided into five categories indicated by columns labeled a "Base Contract Price Amount (before escalation)" 760, "Forecasted Escalation" 762, "Actual Escalation" 764, "Total Escalation" 766 and "Final Total Amount" 768 as depicted. In addition, the tool includes the total amounts of the "Invoicing Events" that will be converted to the currency used for internal reporting purposes. A column 754 as depicted, automatically displays the currency symbol of each invoicing event that is related to the invoicing type that is selected by the user for each "Invoicing Event". The user must also enter a currency conversion factor in a column 756 in order to convert the grand total amount of each "Invoicing Event" into the base currency used for financial reporting. If the currency of the contract is the same as the currency that is used for internal financial reporting purposes, then the user must enter a "1.0000" in the column 756.

As previously noted, the tool includes capability of reporting and developing charts. FIG. 24 illustrates a screenshot 770 depicting a method for generating reports. The user has to click on the menu item "Go To" 304 in the menu bar 301 and select "Reports" 772 which has four items "Contract Value summary", "Billings and Cash received", "Capital cost calculation" and "Charts" as depicted.

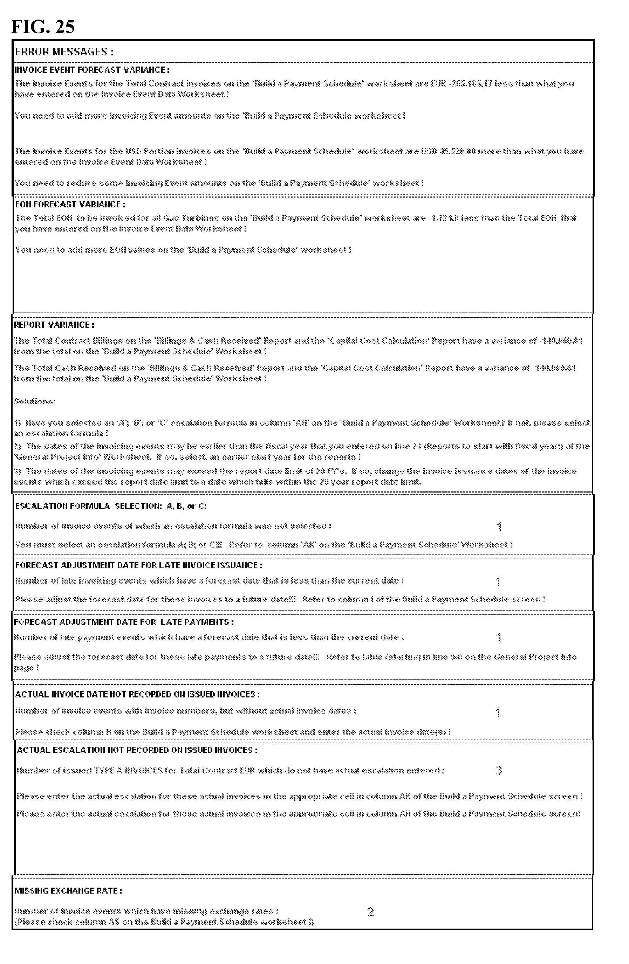

FIG. 25 illustrates a "Contract Value Summary" screen 780. The function of the "Contract Value Summary" screen 780 is to display error and warning messages to help the user quickly determine if the data in the tool has been correctly entered and to display high level financial summary information to give the user an overview of the project's cash status. The error messages include an "Invoice Event" forecast variance 782 which arises when the base contract amount for each of the "Type A" and "Type B" contract portions entered on the "Money Boxes" screen varies from the base amount (before escalation) on the "Build a Payment Schedule" screen. A number of variable unit forecast variance such as EOH wherein an error message 784 is displayed if the number of variable "units" such as, EOH; liters; widgets, and so forth are used to calculate the variable portion entered on the "Money Boxes" screen varies from the number of "units" entered on the "Build a Payment Schedule" screen.

In addition, the error messages include a report variance error message 786 which is displayed if the total contract billings on the 'Billings & Cash Received' report vary from the final total amount on the "Build a Payment Schedule" screen. An error message 788 is also displayed if a proper escalation formula is not selected for an invoicing event on the "Build a Payment Schedule" screen.

The error messages also include a forecast adjustment date for late invoice issuance message 790 if there is a discrepancy in the forecast adjustment date for invoice issuance: An error message on forecast adjustment date for late payments 792, if the actual invoice date is not recorded on issued invoices 794: an error message 796 if escalation is not recorded on issued invoices: and an error message 798 on missing exchange rates as depicted in FIG. 25.

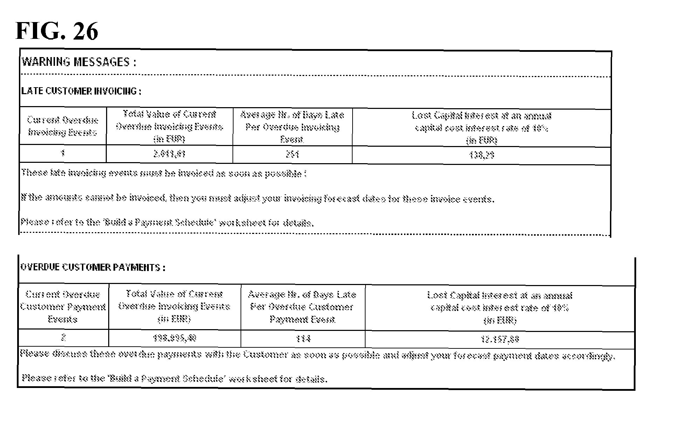

FIG. 26 illustrates a portion 800 of the "Contract Value Summary" screen with warning messages. The warning messages that are generated include warning message related to late customer invoicing 802. This displays the total number of yet to be issued "Invoicing Events" which are late as compared to their "Target Date for Invoice Issuance". The amount of lost capital interest related to these late invoices is also shown. In addition, a warning message related to overdue customer payments 804 is also generated. This displays the total number of "Invoicing Events" which have not been paid by the customer within their contractual payment date. The amount of lost capital interest related to these late customer payments is also shown.

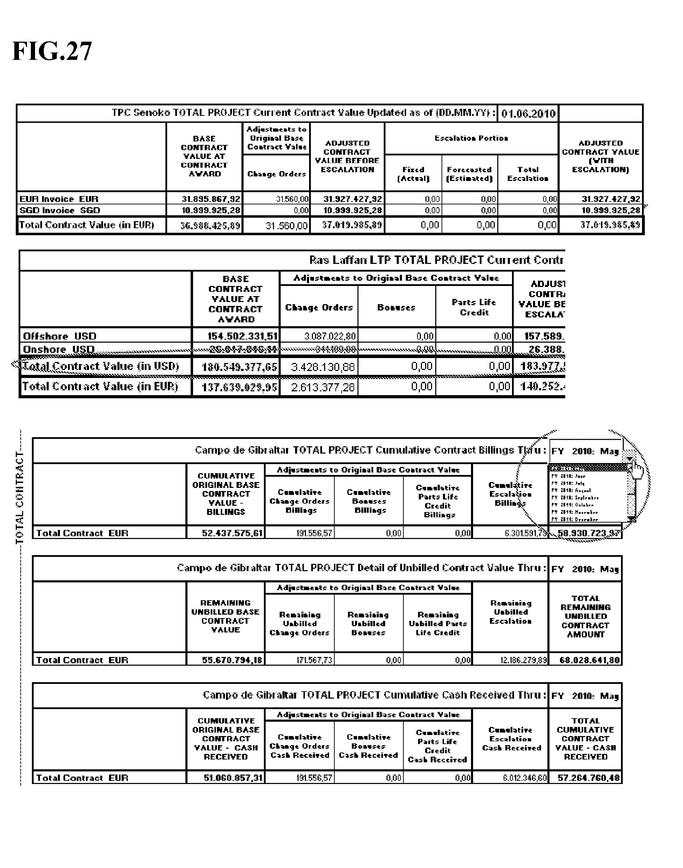

FIG. 27 illustrates a portion 810 of the "Contract Value Summary" screen depicting the summary of financial information for the project into three categories. This includes a current contract value 812, cumulative contract billings 814 and cumulative cash received 816.

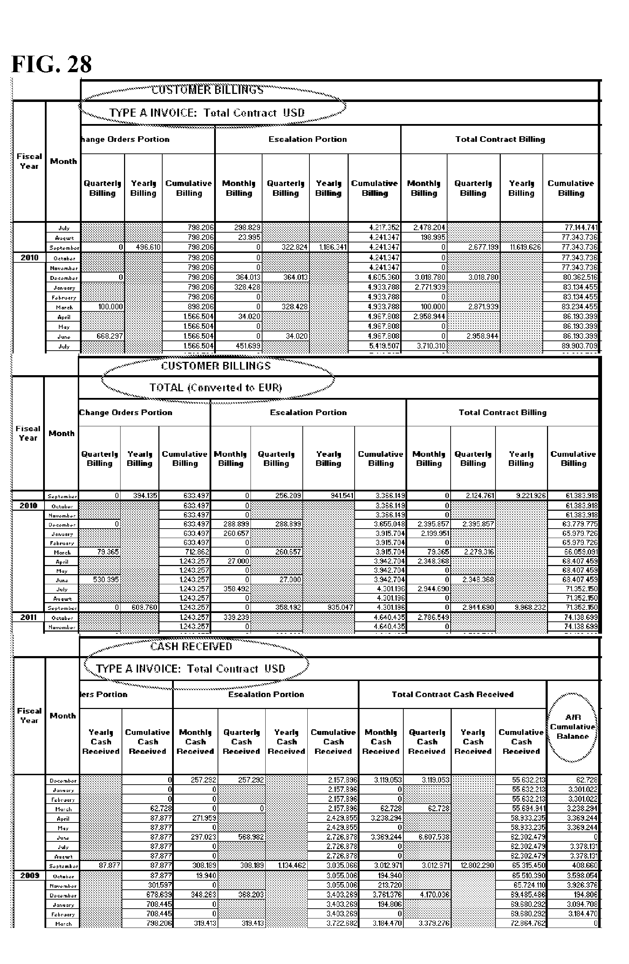

Referring now to FIG. 28 an exemplary "Billings and Cash Received" screen 820 is depicted. The purpose of the "Billings and Cash Received" screen 820 is to instantly display the actual and forecasted invoice billings and cash received amounts in a fiscal year and month order, using the amounts that have been calculated on the "Build a Payment Schedule" screen. These amounts are shown in a monthly; quarterly; yearly, and total cumulative breakdown. As soon as the user makes a change to the "Build a Payment Schedule" screen, it is reflected in the "Billings and Cash Received" screen 820.

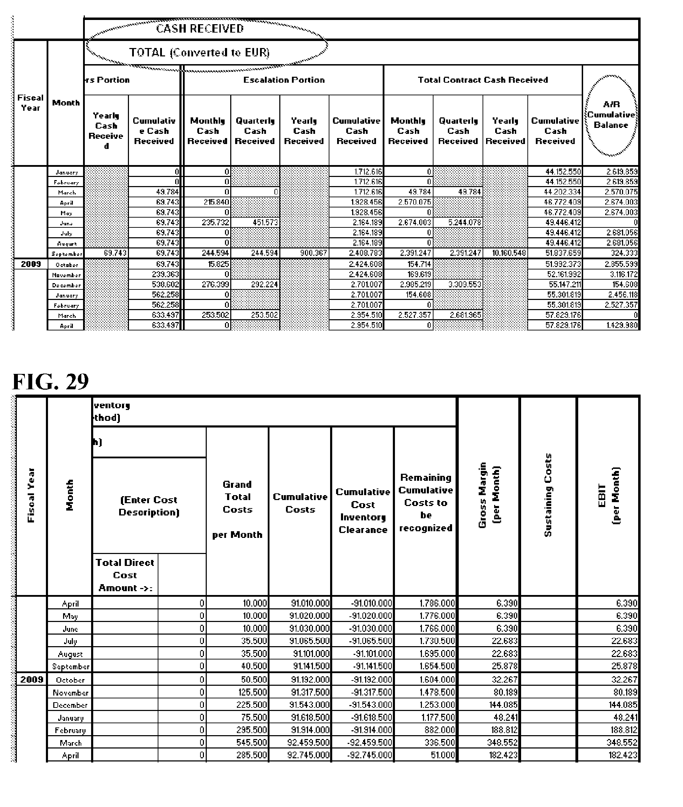

FIG. 29 illustrates a "Capital Cost Calculation" screen 830. The purpose of the "Capital Cost Calculation" screen 830 is to show how well the customer payment schedule will cover an organization's internal financial needs. A "negative" capital cost means that organization has received more money from the customer than it is using for the project and, therefore, organization earns interest on this money. A "positive" capital cost means organization is not receiving enough cash from the customer to cover all of the project needs and therefore, organization must finance the difference internally.

Typically, the "Capital Cost Calculation" screen 830 is used in the marketing proposal phase of the project in order to optimize the payment schedule that will be included in the firm offer to the customer. The "Capital Cost Calculation" screen 830 includes data entry field for entering monthly cost of the project. Alternatively, a cost forecast can also be entered which is based on percentage amounts, or a combination of directly entered costs and a percentage allocation of costs can be used. A gross margin percentage for the project will be automatically calculated by the program as the difference between the total plan sales value (which is the same as the total contract value to be invoiced to the customer that has been calculated in the "Money Boxes" screen) and the total plan costs that are entered on this "Capital Cost Calculation" screen.. The costs are then automatically marked up by the gross margin percentage to get the monthly sales amount (as per the percentage of completion method of accounting). Optionally, the user can enter the sales amount per month as a manual sales override.

In addition, the "Capital Cost Calculation" screen 830 includes a column for sustaining costs, which has to be entered manually by the user. The difference between the gross margin and the sustaining costs is the earnings before interest and taxes (EBIT) and is displayed in the column labeled EBIT. Further the customer billings and cash received forecast, capital costs and EVA amounts are displayed.

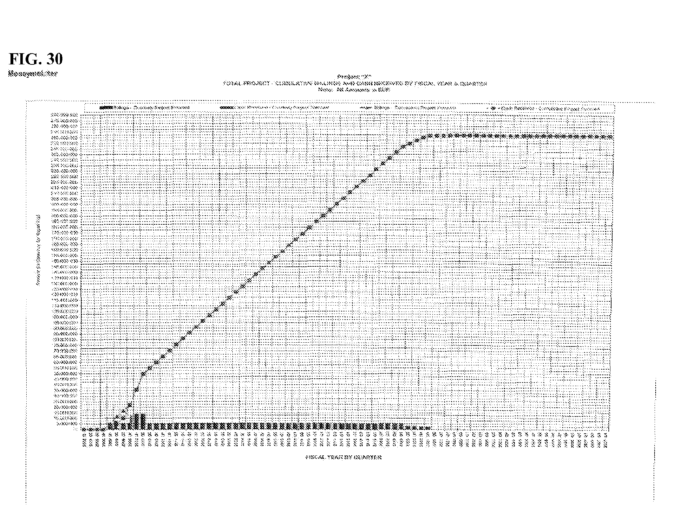

The tool also has the capability to display charts with cumulative sales, costs, and costs calculated on the "Capital Cost Calculation" screen 830 (see FIG. 29). In accordance with aspects of the present technique, various types of charts can be displayed, such as but not limited to a cumulative billings and cash received chart, cumulative sales, costs and capital costs chart, billings and cash received forecast chart for a financial year. FIG. 30 illustrates total cumulative actual and forecasted billings and cash received chart 850 for the entire term of a project. A horizontal axis 852 indicates fiscal year and the vertical axis 854 represents amount in currency for reporting.

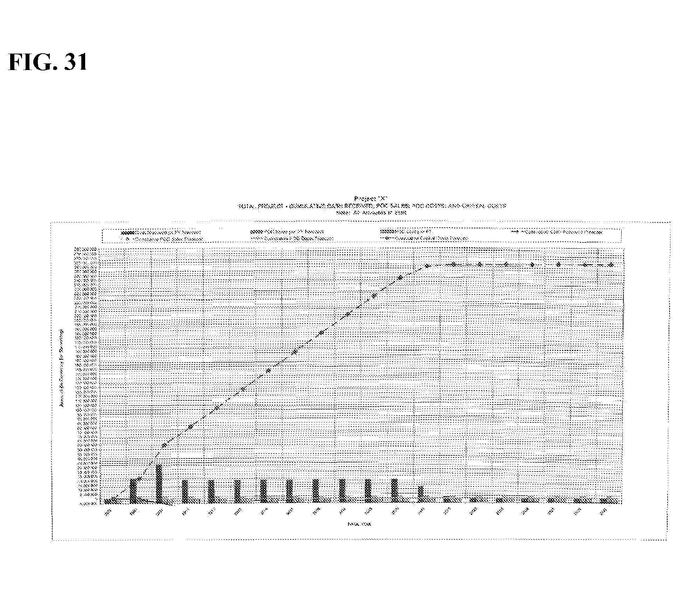

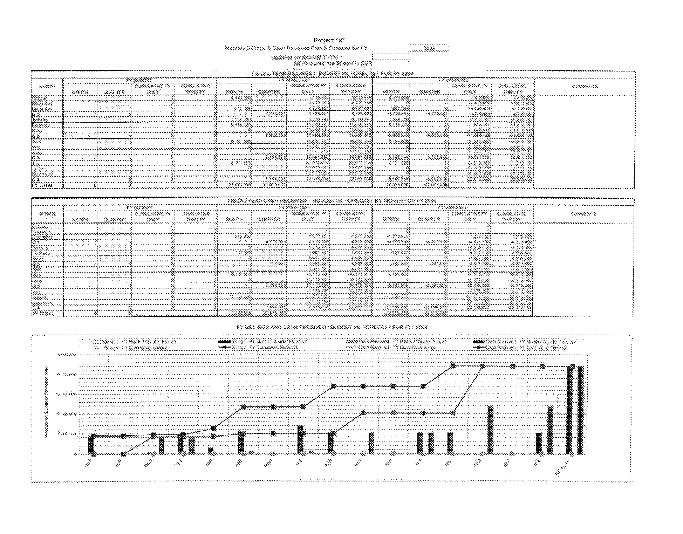

FIG. 31 illustrates a chart 860 depicting the total cumulative sales, costs and capital costs that were calculated on the "Capital Cost Calculation" screen 830 for the term of the entire project. The amounts are shown in the base reporting currency for the project.

FIG. 32 illustrates a chart 870 depicting the comparison between the budget and forecast for the billings and cash received amounts for a particular fiscal year by month, quarter, and cumulative. The amounts are shown in the base reporting currency for the project.

The tool described hereinabove has several advantages. These include a user friendly interface wherein complicated payment schedules can be set up and controlled easily. In addition, the tool provides the capability of setting up the payment schedules in a plurality of currencies, tracking of changed orders and other contract price adjustments, capability to add escalation by calculation using multiple escalation formulas, invoice tracking and controlling capability, including issuing warning messages for delay in invoice issuance and customer payments, capability to display charts and generate detailed reports. The tool also provides security in the form of password protection from unauthorized user. The tool may be used as a stand alone tool, or may be incorporated together with other tools and systems. Furthermore, the tool may be incorporated in a computer readable medium, such as, a compact disk (CD), a DVD, a pen drive, a flash drive and the like.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A computer implemented method for cash management comprising:
defining a target date for invoice issuance for each invoicing event to be invoiced to a customer;
defining a due date for a payment of an invoice by the customer;
sending the invoice to the customer by the target date for invoice issuance;
providing a first input interface for receiving a sending confirmation for sending the invoice;
providing an indication if the sending confirmation is not received by the target date for invoice issuance
providing a second input interface for receiving a payment confirmation on payment of the invoice by the customer; and
providing an indication if the payment confirmation is not received until the due date.

2. The method according to claim 1,
further comprising a payment schedule for one or more invoicing events, wherein the payment schedule comprises one or more target date for invoice issuance for the one or more invoicing events.

3. The method according to claim 2,
wherein the payment schedule comprises one or more due dates for payment of the one or more invoicing events.

4. The method according to claim 1,
wherein the payment schedule comprises a payment amount for the invoicing events set up in one or more currencies.

5. The method according to claim 4,
wherein the payment amount is converted to a base currency from the one or more currencies.

6. The method according to claim 1,
further comprising calculating a capital cost and interest due to a non-payment from the customer for an issued invoice based upon a time period past the due date for the payment.

7. The method according to claim 1,
further comprising calculating a time period and loss of capital interest due to not sending of the invoice by the target issuance date.

8. The method according to claim 1,
further comprising providing a third input interface for modifying the target date for invoice issuance for the invoicing event to a modified forecast date if the invoicing event is not invoiced to the customer by the target date for invoice issuance.

9. A computerized cash management system comprising:
a memory for storing data;
an input device for entering data, wherein data comprises a target date for invoice issuance for an invoicing event and a due date for a payment of an invoice by a customer;
a processor for
accessing data from the memory;
sending the invoice to the customer by the target date for invoice issuance;
providing a first input interface for receiving a sending confirmation for sending the invoice;
providing an indication if the sending confirmation is not received by the target issuance date;
providing a second input interface for receiving a payment confirmation on payment of the invoice by the customer;
providing an indication if the payment confirmation is not received until the due date; and
a display unit for displaying, presenting and indicating data.

10. The system according to claim 8,
wherein the processor comprises an invoice generation module for generating the invoice based on a contract.

11. The system according to claim 8,
wherein the processor comprises an invoice sending module for sending the invoice to the customer.

12. The system according to claim 8,
wherein the memory is a data storage device.

13. The system according to claim 8,
wherein the processor is further configured to provide a third input interface for modifying the target date for invoice issuance of the invoice to a modified forecast date if the invoice is not sent to the customer by the target date for invoice issuance

14. The system according to claim 10,
wherein the invoice sending module is configured to send the invoice to the customer by the forecast date.

15. The system according to claim 10,
wherein the invoice sending module is further configured to record the number of days past the due date for the payment by the customer for the issued invoice.

16. The system according to claim 8,
wherein the processor is further configured to calculate a financial cost impact due to non-sending of the invoice by target date for invoice issuance.

17. The system according to claim 8,
wherein the display unit is further configured to display the financial cost impact, the number of days past the target date for invoice issuance and the number of days past the due date.

18. The system according to claim 8,
wherein the processor is configured to provide a payment schedule for one or more invoicing events, wherein the payment schedule comprises one or more target date for invoice issuance for the one or more invoicing events.

19. The system according to claim 17,
wherein the processor is further configured to convert a payment amount in the one or more currencies to a base currency.

20. The system according to claim 8,
wherein the processor further comprises a report generation module to generate reports for billings, cash received from the customer, capital cost and interest.

21. A computer readable medium embodying instructions which when executed by a computer, causes the computer to perform a method comprising:
defining a target date for invoice issuance for each invoicing event to be invoiced to a customer;
defining a due date for a payment of an invoice by the customer;
sending the invoice to the customer by the target date for invoice issuance;
providing a first input interface for receiving a sending confirmation for sending the invoice;
providing an indication if the sending confirmation is not received by the target date for invoice issuance
providing a second input interface for receiving a payment confirmation on payment of the invoice by the customer; and
providing an indication if the payment confirmation is not received until the due date.
